# EUROPEAN PATENT APPLICATION

(11) **EP 1 447 129 A2**
(43) Date of publication of application: **18.08.2004**
(21) Application number: 04002044.8
(22) Date of filing: 30.01.2004
(51) Int. Cl.: B01J 8/04

(54) **Improved multiphase mixing device with staged gas introduction**

(30) Priority: 05.02.2003 US 358760
(71) Applicant: ExxonMobil Research and Engineering Company, Annandale, New Jersey 08801 (US)
(72) Inventor: McDougald, Neil K., Tracy California 95377 (US); Boyd, Sherri L., Robbinsville New Jersey 08691 (US); Muldowney, Gregory P., Glen Mills Pennsylvania 19342 (US)
(74) Representative: Troch, Geneviève

(57) **Abstract**

A mixing system which provides improved mixing of quench gas and process fluids in the interbed zone of limited height in a downflow reactor while minimizing pressure drop. The mixing system includes a horizontal collection tray, a mixing chamber positioned below the collection tray, at least one spillway passage for liquid and vapor flow extending through the collection tray into the mixing chamber, and a vapor slipstream passageway extending through the collection tray into the mixing chamber for directing a vapor slipstream from above the collection tray into the mixing chamber. The mixing chamber below the collection tray defines a two-phase mixing volume. The vapor slipstream passageway normally has a plurality of vapor inlets arranged to impart rotational movement to the vapor phase when it enters the mixing chamber. As a result of providing at least one additional passageway for a vapor slipstream, significant reacceleration of the vapor phase is achieved in the mixing chamber resulting in improvements in mixing efficiency of both the vapor and liquid phases.

## Description

### FIELD OF THE INVENTION

The present invention relates generally to systems for mixing process gases and liquids and more specifically to interbed quench and mixing systems involving cocurrent downflow reactors using fixed hardware.

### BACKGROUND OF THE INVENTION

Downward flow reactors are used by the chemical and petroleum refining industries in a variety of processes, such as hydrotreating, hydrofinishing and hydrocracking. A typical downward flow reactor has a cylindrical outer wall with one or more internal catalyst beds positioned along the length of the reactor. Each catalyst bed generally rests on a catalyst support grid positioned horizontally within the reactor and spanning the complete diameter of the reactor. The catalyst support grid cooperates with the outer wall of the reactor to retain the catalyst or other particulate material in place with the region between successive catalyst beds defining an interbed zone in which mixing of the reactant liquids and gas takes place, typically in a mixing chamber. A distribution tray is positioned horizontally within the reactor above the catalyst bed for distributing process fluids evenly onto the catalyst. The catalyst support grid, outer reactor wall and the distribution tray define the volume of the catalyst bed. In reactor units of this type, gas and liquid reactants flow downwards through multiple beds of solid catalyst. Many reactions are exothermic, especially hydroprocessing reactions and in the course of the reaction, heat is released causing temperature to increase with distance down the bed.

From the uppermost catalyst bed, reactant fluids and the related fluid products derived from interaction with the catalyst enter the interbed mixing zone. The interbed mixing zone serves several purposes. First, the interbed mixing zone serves as a convenient place through which additional reactants and/or temperature-quenching materials can be introduced into the fluid products. In hydroprocessing reactors, for example, the quench medium is normally in the form of cool, hydrogen-rich gas to quench the temperature rise and replenish the hydrogen consumed by the reactions. Secondly, the interbed mixing zone provides a region for mixing the fluid products. Mixing the fluid products prior to reaction in lower catalyst beds ensures more uniform and efficient reactions. In addition, where catalytic reactions are exothermic and temperature control is a critical processing and safety element, mixing of the fluid products within the mixing chamber can be used to eliminate regions of locally high temperature within the fluid products.

The introduction and mixing of quench into the process gas and liquid must be carried out in the interbed space, which spans the full vessel diameter, but is often shorter axially than one vessel radius. Support beams, piping and other obstructions also occupy the interbed region so that special hardware is required to perform efficient two-phase mixing in what amounts to limited volume.

Poor quench zone performance manifests itself in two ways. First, the quench zone fails to erase lateral temperature differences at the outlet of the preceding bed or, in the worst cases, amplifies them. An effective quench zone should be able to accept process fluids with 30°C to 40°C (about 50°F to 75°F) lateral temperature differences or higher and homogenize them sufficiently that differences do not exceed 3°C (about 5°F) at the following bed inlet. The second sign of poor performance is that inlet temperature differences following the quench zone increase as the rate of quench gas is raised. This indicates inadequate mixing of cooler gas with the hot process fluids.

Poor quench zone performance limits reactor operation in various ways. When interbed mixing is unable to eliminate or significantly reduce temperature differences, these persist or increase as the process fluids move downwards through the reactor. Hot spots in any bed lead to rapid deactivation of the catalyst in that region which shortens the total reactor cycle length. Product selectivities are typically poorer at higher temperatures; hot regions can cause color, viscosity and other qualities to be off-specification. Also, if the temperature at any point exceeds a certain value, typically 425°C to 450°C (about 800°F to 840°F), the exothermic reactions may become self-accelerating leading to a runaway which can damage the catalyst, the vessel, or downstream equipment. Cognizant of these hazards, refiners operating with poor internal hardware must sacrifice yield or throughput to avoid these temperature limitations. With present day refinery economics dictating that hydroprocessing units operate at high feed rates, optimum quench zone design is important.

A variety of multiple bed reactors and mixing devices have been previously described. For example, some mixing chambers are designed to: impart rotational, radial, and/or turbulent flow to the fluids in the chamber. In others, a tortuous path is provided for improved mixing. Still other arrangements are designed to provide separate mixing of the vapor and the liquid phases of the fluids. An arrangement in which two completely separate mixing chambers for imparting rotational flow individually to each phase prior to inter-phase mixing has also been described.

As stated above, the configuration of the mixing chamber must be designed to fit within the fixed volume of the interbed mixing zone while not substantially adversely affecting pressure drop within the reactor. Low pressure drops across the mixing zone are desirable to permit higher fluid flow rates within the reactor. The fixed volume of the interbed mixing zone is a result of design factors including the number of stages of catalyst required to achieve particular reaction characteristics and the desired flow rate through the reactor.

U.S. Pat. No. 4,836,989 describes a method for quench zone design. The essential feature of this design is the rotational flow created in the mixing volume, which increases fluid residence time and provides repeated contacting of liquid and gas from different sides of the reactor. This design is keyed to liquid mixing. More recent studies have shown it to be only a fair gas mixer. The trend to higher conversion and higher hydrogen circulation in fuels refining translates to gas/liquid ratios for which this design is not well suited. Height constrained units cannot be fitted with mixing chambers of the type described in this patent to the point that they are deep enough to effectively mix both the gas and liquid phases.

The interbed mixing system described in U.S. Pat. No. 5,462,719 offers some improvements over the design described above when gas mixing is paramount. This hardware is based again on a swirl chamber, but also includes at least three highly restrictive flow elements to enhance mixing, which such elements necessarily increase pressure drop. Like the previously described system, this quench zone mixes the gas and liquid at once in a single chamber.

Another system, disclosed in U.S. Pat. No. 6,180,068, also provides enhanced mixing of quench gas and process fluids within the interbed space. This system employs separate mixing zones for each of two reactants permitting flexibility in mixing conditions while minimizing pressure drop as well as space and volume requirements. However, the efficiency of this device is sensitive to the degree of phase segregation achieved at the interbed inlet and thus may not perform as desired under all conditions and with respect to particular reactant characteristics.

These and other known mixing systems generally suffer from the fact that there is insufficient space within the mixing chamber to promote intense two-phase mixing. Accordingly, there is a continued need to provide mixing systems that provide intense two-phase mixing. A preferred system also should provide sufficient volume for the vapor phase to mix separately from the liquid phase. Even while satisfying the above criteria, it is preferable that the designated mixing system minimizes the pressure drop within the reactor as well as permitting relatively easy retrofit with existing reactor systems.

Our co-pending US Patent Application No. 10/341,123, filed 13 January 2003, describes the use of baffles in connection with the mixing system. In that invention, a baffle in the form of a substantially vertical wall with a continuous perimeter is attached to the underside of the collection tray, extending down towards the mixing chamber. In a preferred embodiment of that invention, the diameter of the baffle is greater than the diameter of the central outlet of the mixing chamber and smaller than the diameter defined by the spillway outlets leading down through the collection tray. While that device provides a significant improvement in terms of mixing performance, it has been found that additional benefits can be obtained through the use of other and additional structural elements within the mixing system.

Known types of interbed mixing devices typically feature a common inlet to the mixing chamber for both gas and liquid. This gives the beneficial result that the liquid is propelled into the mixing chamber at a high velocity determined by both the gas and liquid flow rates. This inlet velocity typically imparts enough kinetic energy to the liquid to guarantee significant rotation in the mixing chamber which further promotes mixing. By contrast, the gas, being of lower density, dissipates the entering kinetic energy and departs from the desired rotational motion more quickly. As a result, gas phase mixing in prior art systems has been less than ideal.

### SUMMARY OF THE INVENTION

The present invention provides a device to provide more effective mixing of quench gas and process fluids in the interbed space while not significantly increasing the pressure drop. The device is compact in form, making it well adapted to use within the height limitations of the interbed zone to achieve improvements in the effectiveness of the gas phase mixing of two-phase systems in the limited mixing volume available.

According to the present invention, the mixing system comprises a horizontal collection tray, a mixing chamber positioned below the collection tray, at least one passageway extending through the collection tray into the mixing chamber for allowing liquid and vapor to pass from above the tray into the mixing chamber, and an additional passageway which is a vapor slipstream passageway extending through the collection tray into the mixing chamber for directing a vapor slipstream from above the collection tray into the mixing chamber.

The mixing chamber and the collection tray define a two-phase mixing volume. The passageway conducts fluid containing at least some vapor from above the collection tray into the mixing chamber which includes at least one outlet opening for the downward passage of fluid. The outlet from the mixing chamber is preferably a centrally-located circular outlet disposed on the axis of the reactor. The vapor slipstream passageway, preferably has a plurality of inlets arranged to impart rotational movement to the fluids within the mixing chamber, for example, by swirl vanes or by open-ended tubes with outlets arranged tangentially with respect to the rotational axis of the fluids in the mixing chamber.

The vapor slipstream passageway of the present invention may advantageously be used with a baffled mixing chamber as described in co-pending US Patent Application No. 10/341,123, filed 13 January 2003, entitled "Improved Multiphase Mixing Device with Baffles", referred to above.

As a result of providing at least one additional passageway for a vapor slipstream, and optionally, including one or more baffles, significant improvements in mixing efficiency are obtained. Among the resulting benefits is the provision of additional flow paths which offer additional locations where gas energy may be used to provide effective mixing of the gas phase.

The second injection of gas into the mixing chamber in the slipstream can be utilized to renew the rotational motion begun upon initial entry to the chamber and to provide gas-phase re-acceleration within a defined volume within the mixing chamber. A number of subsequent injections of gas slipstreams may be used to achieve repeated renewal of the rotational motion, subject only to spatial and fabrication limits on the interbed assembly.

### DRAWINGS

FIG. 1 is a schematic, side-elevational view of a reactor, shown in cross section;

FIG. 2 is a schematic, side-elevational view of a first embodiment of a mixing system of the present invention;

FIG. 3 is a schematic, oblique view of the mixing system of the FIG. 2;

FIG. 4 is a schematic, side-elevational view of a second embodiment of a mixing system of the present invention, shown in partial cross-section, according to;

FIG. 5 is a schematic, side-elevational view of a third embodiment of a mixing system of the present invention, shown in partial cross-section;

FIG. 6 is a schematic, side-elevational view of a fourth embodiment of a mixing system of the present invention, shown in partial cross-section; and

FIG. 7 is a schematic, cross-sectional view taken along the 7-7 line in FIG. 6.

### DETAILED DESCRIPTION

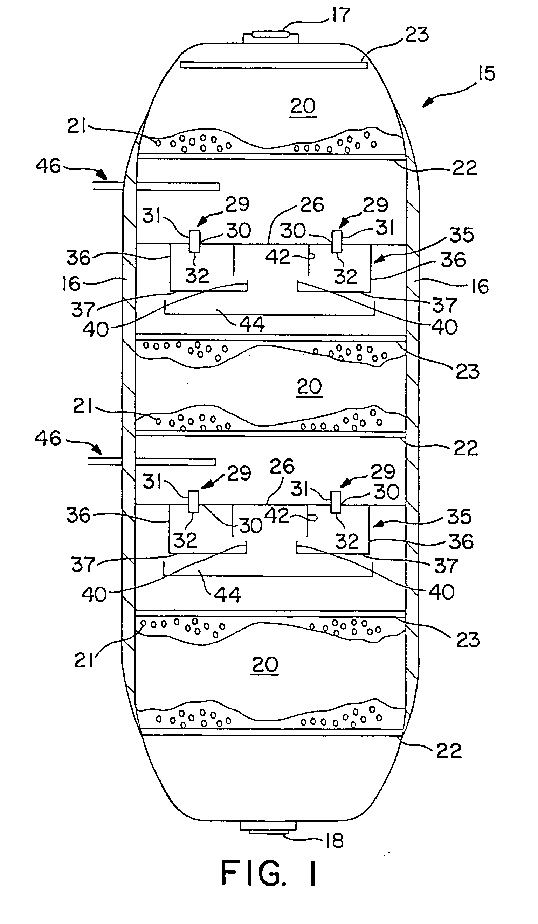

FIG. 1 shows, in simplified form, a hydroprocessing reactor of a type to which the present invention may be adapted. The general configuration of the reactor is conventional, as are details such as the supports for the grids and distributor plates, which are not shown for purposes of clarity. The reactor 15 is formed as a generally cylindrical chamber having an outer wall 16. A reactor inlet 17 and a reactor outlet 18 are provided for introducing and discharging fluids from the reactor 15. The reactor 15 further comprises one or more catalyst beds 20 positioned along the longitudinal axis of the reactor 15. Each of the catalyst beds 20 contains catalyst material 21, which is supported below by a catalyst support grid 22. The catalyst support grid 22, together with the outer wall 16, provides direct support for the catalyst material 21. Alternatively, the catalyst support grid 22 may provide indirect support for the catalyst 21 by retaining one or more layers of a larger supporting solid or solids, which in turn support the catalyst 21. A distribution tray 23, for facilitating even distribution of fluids over the catalyst 21, is provided above the catalyst material 21. The catalyst support grids 22 and the distribution trays 23 comprise meshed or perforated portions having openings sufficiently large to allow the passage of fluids but sufficiently small to prevent the catalyst 21 from passing through. The openings in the distribution trays 23, and any flow devices, which may be associated with the openings in the distribution trays 23, should be sized and spaced such that fluids deposited onto the distribution tray 23, are generally forced to spread substantially over the distribution tray 23 before passing through distribution tray 23.

The spaces between successive catalyst beds define interbed mixing zones. The interbed mixing zones function, in part, to provide a homogeneous mixture of reactants to the catalyst beds 20. Additionally, the interbed mixing zones provide convenient locations for introducing quench fluids and/or supplemental reactants into reactor 15. Although the embodiment shown in FIG. 1 contains three catalyst beds 20 and two interbed mixing zones, the reactor may contain more or less than three catalyst beds and more or less than two interbed mixing zones.

A mixing system is positioned within at least one of the interbed mixing zones. The mixing system comprises a collection tray 26, which extends generally perpendicular to a longitudinal axis of reactor 15. Collection tray 26 spans substantially the entire diameter of reactor 15 so as to divide the interbed mixing zone into an upper and a lower region and collects fluids passing out of catalyst bed 20 above tray 26.

One or more spillway passages 29 are provided in collection tray 26 to provide fluid communication between the upper and lower regions of the interbed mixing zone and permit vapor and/or liquid phases collected above the collection tray 26 to flow downwardly into the lower region of the interbed mixing zone. Each collection tray 26 comprises two passageways 29 formed as spillways at openings 30 within the collection tray 26. A first conduit 31 is formed above the opening 30 for directing fluids through opening 30 and a second conduit 32 is formed beneath opening 30 for directing fluids that have passed through opening 30 away from opening 30 in a direction which imparts rotation to the liquid in mixing chamber 35. Other designs may, however, be utilized. For example, the passageways may comprise open-ended tubes passing through collection tray 26. The spillways which impart rotation motion to the fluids emerging below the collection tray are, however, preferred.

Mixing chamber 35 is positioned below collection tray 26 to receive fluids, which pass through passageways 29. In the embodiment shown in FIG. 1, the mixing chamber comprises a cylindrical wall 36 attached to, and extending perpendicularly away from the lower surface of collection tray 26. Mixing chamber 35 comprises annular floor 37, extending generally horizontally from cylindrical wall 36 upon which fluid can collect. Weir 40 is positioned generally peripherally around the circumference of the centrally located, circular outlet from the chamber; the weir is formed as a retaining wall extending perpendicularly upwards from floor 37 of mixing chamber 35. Fluids therefore flow over weir 40 prior to exiting mixing chamber 35 through the central outlet. Accordingly, weir 40 functions to retain fluid on the floor 37 of mixing chamber 35 until the level of fluid on floor 37 is about the same as, or higher than the height of weir 40.

Flash pan 44 is optionally positioned within the interbed mixing zone below mixing chamber 35. Flash pan 44 comprises a floor with a retaining wall extending substantially vertically upward about the perimeter of the floor. Flash pan 44, which is provided to receive fluids as they are discharged from mixing chamber 35 and evenly distribute them over the surface of distribution tray 23 may optionally have openings or upstanding pipes to convey fluid through the floor of the pan.

One or more quench injectors 46 extend through the wall 16 of reactor 15 into one or more of the interbed mixing zones. Injectors 46 enable a fluid or a gas to be injected into one or more of the interbed mixing zones. Injectors 46 may also enter through the top or bottom head of reactor 15 and pass through catalyst beds 20 and distribution trays 23 to arrive at the interbed mixing zone. For example, in a hydroprocessing reactor, hydrogen may be injected as both a quench fluid and as a reactant. Injectors 46 should provide a uniform, initial distribution of the fluid or gas within the upper regions of the interbed mixing zones.

The reactor shown in FIG. 1 has a circular baffle 42 depending perpendicularly from the bottom of collection tray 26 into mixing chamber 35 to facilitate the mixing of fluids within mixing chamber 35, as described in co-pending US patent application No. 10/341,123. The baffle is located radially between the edge of the central outlet of the mixing chamber and the radial location of the spillway passages 29.

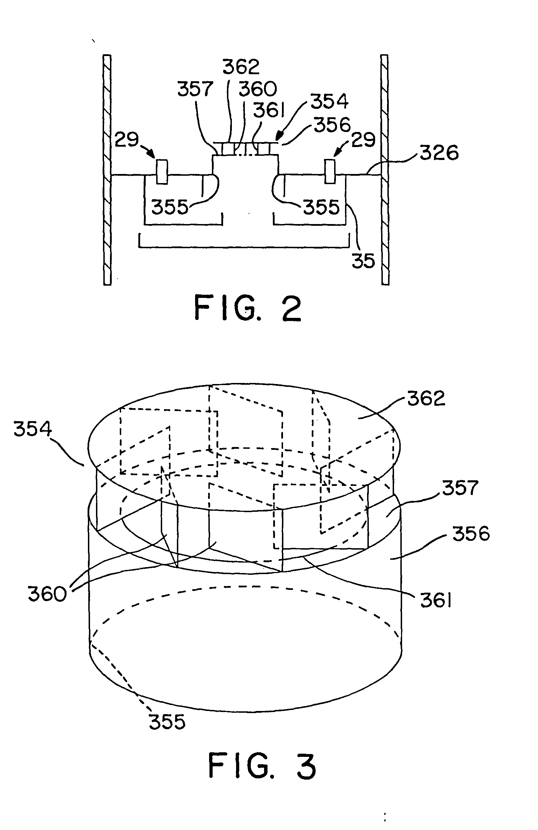

FIG. 2 and FIG. 3 show a vapor slipstream device which may be used within a reactor of the type shown in FIG. 1. This device may be positioned on collection tray 326, corresponding to tray 26 in FIG. 1. An upwardly projecting cap structure or sub-region 354 is formed over opening 355 in collection tray 326 as an upwardly extending wall 356 positioned around the perimeter of opening 355. In this embodiment, the mixing device is preferably designed such that if baffle 342 is present on the underside of the collection tray (corresponding to baffle 42 in FIG. 1), wall 356 of the upwardly projecting sub-region 354 is not coextensive with baffle 342. Instead, opening 355 is wholly contained within the area circumscribed by baffle 342 on the underside of collection tray 326. The height of wall 356 can be varied to suit the particular application for which the mixing system is to be used.

In the embodiment shown in FIG. 2, a gas swirl chamber is provided so that a fraction of the gas phase components bypass the two-phase passageways 29 and pass down through collection tray 326 as a slipstream. The slipstream passageway has tangential inlets 361 to the swirl chamber to establish a rotation in the slipstream of gas, which complements the rotational flow of the two-phase fluid already established in mixing chamber 35. A plurality of vanes 360 direct a portion or slipstream of the vapor phase components from the upper region of the interbed mixing zone above the collection tray through inlets 361 to the lower region below the tray. In so doing, vanes 360 provide for re-acceleration of the vapor phase within the mixing system. As best seen from FIG. 3, openings 361 are formed in the bottom portion (landing) 357 of the upwardly projecting cap structure 354 by swirl vanes 360 which extend substantially upwards from landing 357. Vanes 360 are preferably angled such that they impart a rotational or "swirling" motion to the vapor phase components as the vapor phase components flow in through openings 361 and around vanes 360 into the gas mixing zone circumscribed by baffle 342. If baffle 342 is not present, the vapor components flow into the general area of mixing chamber 35 below opening 355. The angle formed in the horizontal plane between any one of vanes 360 and a radius of cap structure 354 is preferably between 10° and 80°, with an angle between 40° to 50° being the most preferable embodiment. As can be seen in the figures, a cover plate 362 is positioned above vanes 360 to reduce the flow of the liquid phase components through openings 361 and to force the gas phase flow to enter substantially horizontally between vanes 360.

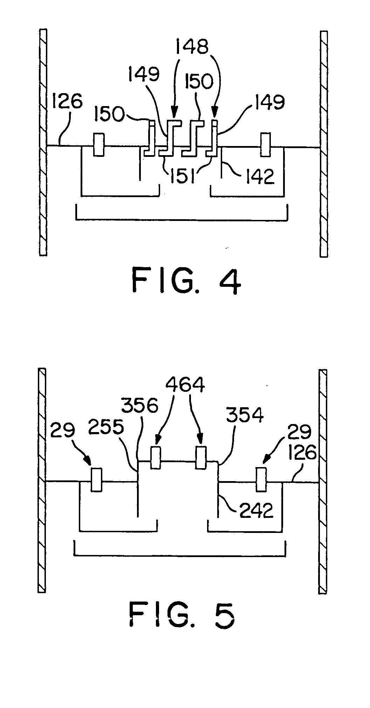

An alternative embodiment of the mixing system is illustrated in FIG. 4. In this embodiment, a plurality of vapor chimneys or other conduits passing through collection tray 126 provides an additional flow path for gas slipstreams. Conduits or chimneys 148 extend through collection tray 126 into the volume circumscribed by baffle 142. If baffle 142 is not present, conduits or chimneys 148 extend through the collection tray into the general volume of the mixing chamber located below tray 126, in a similar disposition to chamber 35 of Figs. 1 and 2. Chimneys 148 protruding into the upper region of the interbed mixing zone direct a portion or slipstream of the vapor phase components from the upper region of the interbed mixing zone to the lower region below the collection tray. In so doing, chimneys 148 provide for re-acceleration of the vapor phase within the mixing system. Additionally, chimneys 148 provide the benefit of reducing the overall pressure drop in the reactor by increasing the number of pathways and the total flow cross section for vapor to flow.

In the embodiment of FIG. 4, each of chimneys 148 is formed from a first tubular section 149 extending through collection tray 126 and oriented such that a longitudinal axis of the first tubular section is substantially perpendicular to collection tray 126. A horizontally oriented inlet 150 is formed by a second tubular section at the top end of tubular section 149. The inlet 150 is so formed to reduce, or eliminate entirely, the amount of liquid components from passing through chimney 148. A horizontally oriented outlet 151 is formed by a third tubular section at the lower end of the section 149 extending into the lower region of the interbed mixing zone. The outlets 151 of chimneys 148 are preferably oriented to impart a rotational or "swirling" motion to the vapor phase components as those components exit chimneys 148. The rotational or "swirling" motion further improves the vapor phase mixing efficiency and creates intense two-phase mixing by re-accelerating the vapor phase.

In the embodiment of FIG. 5, the mixing system comprises an raised cap or upwardly projecting sub-region 354 formed over an opening 255 in the collection tray 126. The cap is formed as an upwardly extending wall 356 positioned above the perimeter of opening 255 such that wall 356 is coextensive with baffle 242. If baffle 242 is not present, any opening size within the diameter formed by the passageways 29 may be used. The height of the upwardly extending wall 356 may be varied to suit the particular application for which the mixing system is to be used.

The mixing system in the embodiment of FIG. 5 comprises at least one and preferably a plurality of spillways 464 which direct a portion or slipstream of the vapor phase components from the upper region of the interbed mixing zone to the lower region below the collection tray 126. In so doing, spillways 464 provide for re-acceleration of the vapor phase within the mixing system. Spillways 464 may be structurally similar to the spillways 29 described above in connection with FIG. 1 and will be preferably oriented to impart a rotational or "swirling" motion to the vapor phase components as these components exit spillways 464 to further improve vapor phase mixing efficiency.

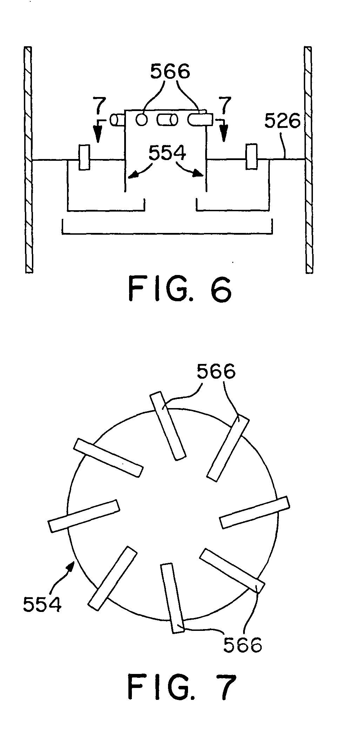

In the embodiment illustrated by FIGS. 6 and 7, a raised cylindrical cap on the collection tray has a plurality of inlet conduits 566 passing through its vertical side wall. In this embodiment, these conduits terminate in a tangential orientation to create beneficial rotational flow within the cap. In this embodiment, it is preferable that the cylindrical cap, 554, extends higher above collection tray 526 than the upwardly proj ecting cap structures of previous embodiments. Inlet conduits 566 direct a portion or slipstream of the vapor phase components from the upper region of the interbed mixing zone to the lower region below collection tray 526. In so doing, inlets 566 provide for re-acceleration of the vapor phase within the mixing system. As shown, each inlet 566 is formed from a tubular section that projects through the upwardly projecting sub-region 554. The tubular sections are preferably oriented to impart a rotational or "swirling" motion to the vapor phase components as these components exit the inlets 566, to further improve the vapor phase mixing efficiency.

As referenced above with respect to each of the embodiments generally, although the figures show the combined use of a baffle underneath the tray (26, 126, 326, 526) with an upwardly projecting cap structure (354, 554) or vapor conduits (149, 566) to allow for the vapor slipstream to pass through the tray, each of these features can be utilized independently or in various combinations depending upon the particular application and other constraints. Multiple upwardly projecting caps or conduits may be formed on a single collection tray to multiply the benefits if space allows.

The following table presents data from cold flow testing reflecting pressure drop for the various embodiments of the present invention, relative to a base design without secondary flow paths for slipstreams of gas, at fixed operating conditions. The table reports the pressure drop, ΔP, achieved with each of the configurations shown in the table.

| Run | Description | ΔP kPa (Psi) |
|---|---|---|
| 1 | Base Case - No Slipstreams | 28.3 (4.1) |
| 2 | Base + 4 vapor chimneys | 27.6 (4.0) |
| 3 | Base + 8 vapor chimneys | 26.2 (3.8) |
| 4 | Base + 16 vapor chimneys | 22.7 (3.3) |
| 5 | Base + Gas Swirl Chamber | 21.4 (3.1) |

The following table presents data from cold flow testing reflecting mixing performance for the gas swirl chamber relative to a base design without secondary flow paths for slipstreams of gas, at fixed operating conditions. The reported gas mixing index is defined as 100 less the standard deviation of tracer concentration, expressed as a percentage of the mean concentration, from eight sample locations equally spaced around the perimeter of the vessel below the mixing chamber. The different mixing indices reported correspond to different tracer injection locations upstream of the mixing volume. The averages shown are weighted to reflect the fraction of the reactor cross-section represented by each injection location as determined by the geometry and symmetry of the volume above the collection tray. The weights for injection locations 1 to 6 are 2, 2, 2.5, 4, 3 and 1, respectively.

| Run | Description | 1 | 2 | 3 | 4 | 5 | 6 | Avg. |
|---|---|---|---|---|---|---|---|---|
| 1 | Base Case - No Slipstreams | 46 | 50 | 94 | 55 | 60 | 47 | 60 |
| 5 | Base + Gas Swirl Chamber | 59 | 62 | 75 | 67 | 62 | 45 | 64 |

As can be seen, the addition of gas slipstreams by chimneys reduces pressure drop and the introduction of gas via a swirl chamber reduces pressure drop while improving gas mixing.

The teachings of the present invention may be employed in any multi-bed catalytic reactor or contactor requiring intermittent mixing and/or quench of downward flowing gas and liquid phases particularly when taking advantage of rotational flow in a mixing volume. The invention is particularly beneficial in connection with units with very limited inter-bed height. Further, existing quench hardware may relatively easily be retrofitted with the improvements discussed here to achieve the benefits described.

## Claims

1. A multiphase mixing system for distributing vapor and liquid across a downflow reactor, comprising:
(a) a collection tray for receiving vapor and liquid,
(b) a mixing chamber below the collection tray having at least one outlet opening for the downward passage of vapor and liquid,
(c) at least one conduit extending through the collection tray into the mixing chamber for permitting the flow of vapor and liquid from above the collection tray and into the mixing chamber; and
(d) at least one vapor slipstream passageway for permitting the flow of a vapor slipstream from above the collection tray and into the mixing chamber.

2. The system of claim 1 in which the collection tray includes an upwardly projecting cap comprising the vapor slipstream passageway.

3. The system of claim 2 in which the upwardly projecting cap includes a plurality of inlets for receiving the vapor slipstream flow.

4. The system of claim 3 in which the upwardly projecting cap includes a plurality of vanes to create rotational flow of the vapor slipstream entering the inlets.

5. The system of claim 4 in which the angle in the horizontal plane formed between any one of the vanes and a radius of the upwardly projecting cap is between 10° and 80°.

6. The system of claim 1 in which the vapor slipstream passageway comprises a plurality of open tubes passing through the collection tray.

7. The system of claim 6 in which the longitudinal axis of the open tubes is substantially perpendicular to the collection tray.

8. The system of claim 7 in which each of the open-ended tubes has an inlet tubular section above the collection tray and extending substantially parallel to the collection tray.

9. The system of claim 7 or 8 in which each of the open tubes has an outlet tubular section below the collection tray and extending substantially parallel to the collection tray.

10. The system of claim 2 in which the upwardly projecting cap has at least one spillway which directs a portion of the vapor phase components from above the collection tray into the mixing chamber.

11. The system of claim 2 in which the collection tray comprises a plurality of upwardly projecting caps.

12. The system of claim 2 in which the cap comprising a vertical wall through which a plurality of conduits pass, with the conduits terminating tangentially within the cap to create rotational flow within the cap.

13. The system of claim 1 comprising:
(a) a collection tray disposed across the reactor for receiving vapor and liquid from a catalyst bed above the tray,
(b) an annular mixing chamber below the collection tray having at least one centrally located outlet for the downward passage of vapor and liquid,
(c) a plurality of spillway conduits located radially outward from the central outlet of the mixing chamber and extending through the collection tray into the mixing chamber to permit the flow of fluid comprising vapor and liquid from above the collection tray into the mixing chamber with the lower end of each spillway conduit directed to induce rotation of the fluid in the mixing chamber; and
(d) at least one vapor slipstream passageway for permitting the flow of a vapor slipstream from above the collection tray and into the mixing chamber.

14. The system of claim 13 in which the vapor slipstream is located in an centrally located upwardly projecting cap on the collection tray.

15. The system of claim 13 or 14 in which the annular mixing chamber comprises a vertical wall depending from the underside of the collection tray, an annular bottom and an upstanding rim forming a liquid weir.

16. The system of any of claims 1 to 12 which includes a baffle attached to the underside of the collection tray and located between the outlet of the mixing chamber and the conduit for permitting flow of vapor and liquid through the collection tray.

17. The system of claim 13, 14 or 15 which includes a baffle on the underside of the collection tray and located between the central outlet of the annular mixing chamber and the spillway conduits for permitting flow of vapor and liquid through the collection tray.

18. A downflow reactor comprising a reactor vessel having a plurality of superimposed catalyst beds with at least one interbed zone between successive beds and a multiphase mixing system as claimed in any of claims 1 to 16 in the interbed zone.

19. A down flow reactor according to claim 17 in which the multiphase mixing system has an upwardly projecting cap on the collection tray of each mixing device with at least one vapor slipstream passageway for permitting the flow of vapor from above the collection tray into the mixing chamber below the collection tray.

20. A down flow reactor according to claim 18 in which the upwardly projecting cap has a plurality of vapor inlets around its periphery with swirl vanes to impart swirl to the vapor entering the inlets.
